# EUROPÄISCHE PATENTSCHRIFT

(11) **EP 0 639 756 B1**
(45) Veröffentlichungstag und Bekanntmachung des Hinweises auf die Patenterteilung: **21.11.2001**
(21) Anmeldenummer: 94112373.9
(22) Anmeldetag: 08.08.1994
(51) Int. Cl.: G01F 1/34, D03D 47/30, D04H 3/03

(54) **Verfahren zum Überwachen des Gasdurchsatzes durch Injektordüsen, Injektordüse zur Durchführung dieses Verfahrens, sowie deren Verwendung**
Method to monitor gas flow through injector nozzles, injector nozzles for carrying out this method as well as their use
Procédé pour contrôler l'écoulement gazeux à travers des buses d'injection, buses d'injection pour réaliser ce procédé ainsi que leur utilisation

(30) Priorität: 18.08.1993 DE 4327693
(43) Veröffentlichungstag der Anmeldung: 22.02.1995
(73) Patentinhaber: Johns Manville International, Inc., Denver, Colorado 80202 (US)
(72) Erfinder: Profé, Hans Jürgen, D-86399 Bobingen (DE); Rabe, Norbert, D-14167 Berlin (DE)
(74) Vertreter: Luderschmidt, Schüler & Partner GbR

(56) Entgegenhaltungen:
- EP-A- 0 071 246
- WO-A-82/01728
- DE-A- 1 926 112
- DE-B- 1 528 903
- US-A- 4 346 504

## Beschreibung

Die vorliegende Erfindung betrifft ein Verfahren zum Überwachen des Gasdurchsatzes durch Injektordüsen, speziell ausgestaltete Injektordüsen und Injektordüsenanordnungen, sowie die Verwendung solcher Düsenanordnungen beim Verfahren zur Herstellung von Spinnvliesen.

In zahlreichen Verfahrensschritten bei der Faserherstellung, -nachbehandlung und Weiterverarbeitung kommen Düsen zur Anwendung. Sei es als Transportmittel oder zum Erzielen bestimmter Effekte, beispielsweise von Kräuselungen.

Bei einigen dieser Anwendungen ist es notwendig, den Gasdurchsatz durch die Düse zu kontrollieren. So ist es bei der Herstellung von Spinnvliesen allgemein üblich, die Verstreckung der frisch ersponnenen Filamente mittels Verstreckdüsen vorzunehmen. Diese Düsen sind zwischen Spinndüsen und Ablageeinrichtung geschaltet (vergl. Vliesstoffe; Herausgeber: J. Lünenschloß und W. Albrecht, S. 106-7, G. Thieme Verlag, 1982). Üblicherweise sind diese Verstreckdüsen als Injektordüsen ausgestaltet, worin ein Treibgas, üblicherweise Luft, der Düse seitlich zugeführt wird und die Düse so durchströmt, daß an deren Eintrittsende ein Unterdruck erzeugt wird, so daß zusammen mit den Filamenten noch Gas angesaugt wird, welche als Sauggas zusammen mit dem Treibgas und den Filamenten die Düse auf der Austrittsseite verläßt.

Um die Verstreckung unter möglichst kontrollierten Bedingungen vornehmen zu können, bietet es sich an, den Gasdurchsatz bei der Verstreckung zu überwachen. Dies kann beispielsweise durch Schwebekörper-Durchflußmesser, sogenannte Rotameter erfolgen, die in den jeweiligen Zuleitungen für das Treibgas zu den Verstreckdüsen installiert sind. Bei der Rotametermessung erfährt ein Staukörper in einer Gasströmung einen Auftrieb und eine Staukraft. Die Höhe des Staukörpers stellt eine Maßzahl für den Durchfluß dar.

Die Installation von Rotametern erfordert einen gewissen Platzbedarf. Ferner läßt sich mit dieser Meßmethode nur die Zufuhr des Treibgases überwachen, während die Zufuhr des Sauggases nicht oder nur unter erschwerten Bedingungen kontrolliert werden kann.

Es wurde nun gefunden, daß der Gasdurchsatz von Injektordüsen auf einfache Weise und platzsparend kontrolliert sowie automatisiert werden kann, wenn als Maß für den Durchsatz von Saug- und Treibgas der Druck im Verstreckrohr gemessen wird.

Die vorliegende Erfindung betrifft ein Verfahren zum Überwachen des Gasdurchsatzes von Injektordüsen, wobei jeder Injektordüse ein Verstreckrohr nachgeschaltet ist, dadurch gekennzeichnet, daß der Druck in dem der Injektordüse nachgeschalteten Verstreckrohr ermittelt wird.

Die Messung des Drucks in dem der Injektordüse nachgeschalteten Verstreckrohr kann mittels eines Drucksensors erfolgen.

Bei dem Drucksensor kann es sich um jede für diesen Zweck geeignete Vorrichtung handeln, solange der Transport der Filamente im Verstreckrohr dadurch nicht behindert wird.

Mit dem Drucksensor wird der Staudruck des Gases im Verstreckrohr ermittelt.

Beim Durchtritt des Gases durch das Verstreckrohr baut sich der Staudruck in Richtung zur Austrittsseite linear bis zum Umgebungsdruck ab. Je größer der Staudruck ist, umso genauer ist der Gasdurchsatz zu bestimmen. Bevorzugt wird daher der Staudruck in demjenigen Drittel des Verstreckrohres gemessen, das sich an die Stelle des Eintritts des Gases in das Verstreckrohr anschließt.

Beispiele für Drucksensoren sind Zeigermanometer.

Die Meßköpfe dieser Drucksensoren können direkt in das Verstreckrohr einmünden und somit den Staudruck direkt ermitteln.

In einer besonders bevorzugten Ausführungsform wird der durch den Staudruck im Verstreckrohr bewirkte statische Druck an der betreffenden Stelle des Verstreckrohres gemessen. Zu diesem Zweck enthält das Verstreckrohr an der betreffenden Stelle eine Bohrung, welche in einen abgeschlossenen Raum mündet, in dem sich ein statischer Druck aufbaut, der dem Druck an der betreffenden Stelle des Verstreckrohres entspricht. Die Druckmessung erfolgt in diesem Meßraum, beispielsweise durch einen Drucksensor, dessen Meßkopf in der Wand des Meßraumes angebracht ist oder der vorzugsweise über eine Schlauchverbindung mit dem Meßraum verbunden ist. Bei der Wahl des Durchmessers der Bohrung ist darauf zu achten, daß Druckschwankungen im Verstreckrohr aus-geglichen werden und sich nicht oder nur abgeschwächt in den Meßraum übertragen. Typische Durchmesser der Bohrung liegen im Bereich von kleiner gleich 1,2 mm.

Besonders bevorzugt ist die Ausführungsform, worin der Drucksensor über eine Schlauchverbindung mit dem Meßraum verbunden ist. Diese Variante gestattet den Anschluß mehrerer Meßstellen an einen Drucksensor.

In einer bevorzugten Ausführungsform des erfindungsgemäßen Verfahrens werden die Druckmeßwerte mehrerer Injektordüsen sequentiell abgefragt.

Dies erfolgt üblicherweise durch einen Wahlschalter, mittels dessen die Druckmeßeinrichtungen der einzelnen Injektordüsen der Reihe nach abgefragt werden.

Bei dem Wahlschalter kann es sich um jede für diesen Zweck geeignete Einrichtung handeln, beispielsweise um eine elektronische Schaltung, die die einzelnen Druckmeßeinrichtungen der Reihe nach abfragt, wobei diese Abfrage automatisiert sein kann oder auch durch Handbetrieb erfolgen kann; es kann sich aber auch um eine mechanische Schaltung handeln, beispielsweise um einen Stufenschalter.

Vorzugsweise handelt es sich bei dem Wahlschalter um einen pneumatischen Stufenschalter. Ein Beispiel dafür ist ein pneumatischer Stufenschalter der Firma Samsomatic. In dieser Ausführungsform können die von mehreren Meßräumen abführenden Schlauchleitungen über den Wahlschalter auf einen Drucksensor geführt werden.

In einer weiteren besonders bevorzugten Ausführungsform werden die von den einzelnen Meßräumen abführenden Schlauchleitungen über ein automatisch gesteuertes Magnetventilsystem geschaltet und einem Drucksensor zugeleitet.

In einer besonders bevorzugten Ausführungsform des erfindungsgemäßen Verfahrens wird der Druckmeßwert verschiedener Injektordüsen nacheinander einem Meßwertumformer zugeführt und angezeigt und/oder der umgeformte Druckmeßwert wird zu einer Regelung des Gasdurchsatzes durch die jeweilige Injektordüse verwendet. Zu diesem Zweck wird der gemessene Gasdurchsatz der einzelnen Düsen mit einem vorbestimmten Sollwert verglichen und bei Über- oder Unterschreiten eines vorgegebenen Bereiches so eingeregelt, daß der Gasdurchsatz in besagten Bereich zurückgeführt wird.

Ferner betrifft die Erfindung eine Injektordüse umfassend einen Einzugstrichter, der durch ein Injektorrohr verlängert ist, und der in eine Gas-Verteilerkammer mündet, welche zumindest mit einer Gaszuführleitung ausgestattet ist, und welche Gas-Verteilerkammer durch eine gekrümmte Rotationsfläche mit einem Austrittskanal verbunden ist an den sich ein Verstreckrohr anschließt, wobei die Längsachse des Injektorrohres mit der Längsachse des Austrittskanals zusammenfällt und das stromab gelegene Ende des Injektorrohres in der Höhe der Verbindung des Austrittskanals mit der gekrümmten Rotationsfläche liegt, dadurch gekennzeichnet, daß das Verstreckrohr eine Druckmeßeinrichtung aufweist.

Injektordüsen dieses Typs sind beispielsweise aus der DE-A-1,926,112 bekannt.

In einer bevorzugten Ausgestaltung der erfindungsgemäßen Injektordüse ist das Injektorrohr in Richtung seiner Längsachse bewegbar ausgestaltet, so daß der durch das Injektorrohr und die gekrümmte Rotationsfläche begrenzte Ringspalt variiert werden kann. Mit dieser Ausgestaltung lassen sich die Ströme von Treibgas und angesaugtem Gas steuern.

Beispiele für solche Injektordüsen findet man in der US-A-4,346,504.

In einer besonders bevorzugten Ausgestaltung der erfindungsgemäßen Injektordüse ist im Verstreckrohr eine Bohrung angebracht, welche in einen abgeschlossenen Meßraum mündet, in dem die Druckmessung mittels einer Druckmeßeinrichtung beispielsweise eines Drucksensors, erfolgt, welche insbesondere über eine Schlauchleitung mit dem abgeschlossenen Meßraum verbunden ist.

Die Erfindung betrifft ferner eine Injektordüsenanordnung umfassend mehrere Injektordüsen, wie oben definiert, und einen Wahlschalter, vorzugsweise einen pneumatischen Stufenschalter, mittels der die Drucksensoren der einzelnen Injektordüsen sequentiell abgefragt werden.

Ganz besonders bevorzugt wird eine Injektordüsenanordnung, wie oben definiert, worin ein einziger Meßwertumformer vorgesehen ist, der von dem Wahlschalter angesteuert wird.

Dieser Meßwertumformer weist insbesondere eine Anzeigeeinrichtung auf, welche die ermittelten Druckwerte anzeigt. Vorzugsweise ist pro Injektordüse eine Anzeigeeinrichtung vorgesehen.

In einer ganz besonders bevorzugten Ausführungsform betrifft die Erfindung eine Injektordüsenanordnung, wie oben definiert, die eine Regeleinrichtung sowie Vorrichtungen zum Einstellen des Gasdurchsatzes durch die Injektordüsen aufweist, welche Regeleinrichtung vom Meßwertumformer angesteuert wird, den gemessenen Gasdurchsatz durch die einzelnen Injektordüsen mit einem vorbestimmten Sollwert vergleicht und bei Über- oder Unterschreiten eines vorgegebenen Bereiches mittels der Vorrichtungen so einregelt, daß der Gasdurchsatz in besagten Bereich zurückgeführt wird. Dies kann beispielsweise durch eine Regelung des Druckes der Treibluft und/oder durch die weiter oben beschriebene Bewegung des Injketorrohres in Richtung seiner Längsachse erfolgen.

Die beschriebene Injektordüsenanordnung läßt sich insbesondere zur Messung des Gasdurchsatzes der Verstreckdüsen bei der Herstellung von Spinnvliesen einsetzen. Die Erfindung betrifft auch die Verwendung für diesen Zweck.

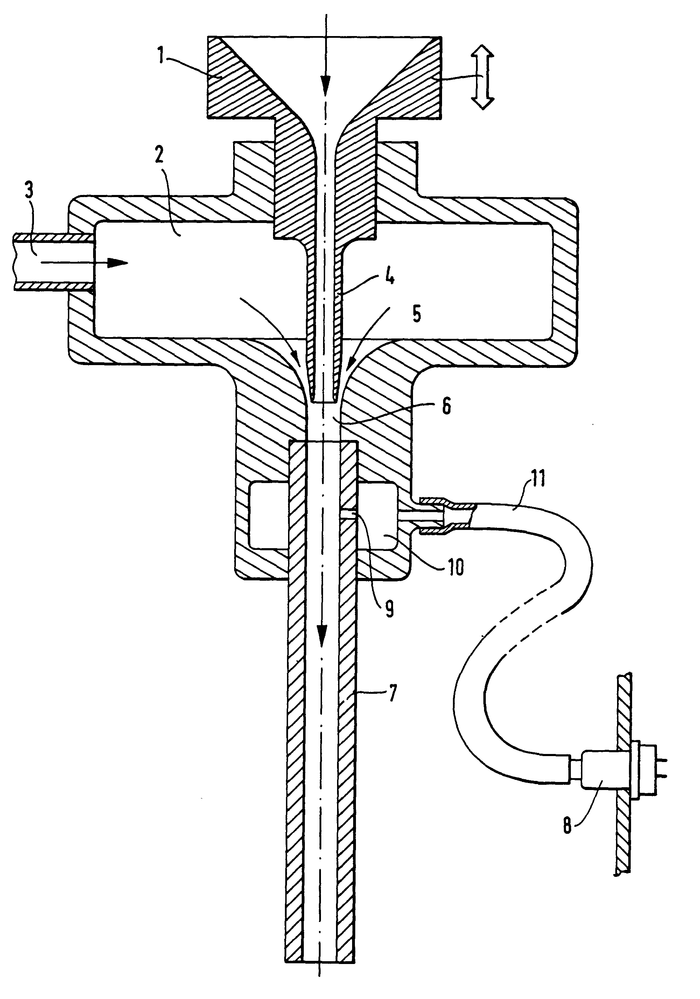

Die Abbildung stellt eine erfindungsgemäße Injektordüse beispielhaft dar.

Die erfindungsgemäße Injektordüse weist einen Einzugstrichter (1) für das Fadenbündel auf, der durch ein Injektorrohr (4) verlängert ist, und der in eine Gas-Verteilerkammer (2) mündet, welche zumindest mit einer Gaszuführleitung (3) ausgestattet ist. Die Gas-Verteilerkammer (2) ist durch eine gekrümmte Rotationsfläche (5) mit einem Austrittskanal (6) verbunden, an den sich ein Verstreckrohr (7) anschließt, das mit dem Austrittskanal (6) gasdicht verbunden ist. Die Längsachse des Injektorrohres (4) fällt mit der Längsachse des Austrittskanals (6) zusammen und das stromab gelegene Ende des Injektorrohres (4) liegt in der Höhe der Verbindung des Austrittskanals (6) mit der gekrümmten Rotationsfläche (5). Dadurch bildet sich ein Spalt, durch den das über die Gaszuführleitung (3) zugeführte Treibgas in den Austrittskanal (6) entweichen kann. Das Verstreckrohr (7) weist eine Druckmeßeinrichtung (8) auf.

In der dargestellten Ausführungsform ist im Verstreckrohr (7) eine Bohrung (9) angebracht, welche in einen abgeschlossenen Meßraum (10) mündet. In diesem Meßraum (10) wird der statische Druck mittels einer Druckmeßeinrichtung (8), vorzugsweise eines Drucksensors, gemessen, welcher über eine Schlauchleitung (11) mit dem Meßraum (10) verbunden ist.

Der durch den Drucksensor ermittelte Meßwert wird über einen nicht dargestellten pneumatischen Stufenschalter einem nicht dargestellten Meßwertumformer zugeleitet, welcher eine nicht dargestellte Anzeigeeinrichtung ansteuert.

## Patentansprüche

1. Verfahren zum Überwachen des Gasdurchsatzes von Injektordüsen, wobei jeder Injektordüse ein Verstreckrohr nachgeschaltet ist, **dadurch gekennzeichnet, daß** der Druck in dem der Injektordüse nachgeschalteten Verstreckrohr ermittelt wird.

2. Verfahren nach Anspruch 1, **dadurch gekennzeichnet, daß** der durch den Staudruck im Verstreckrohr bewirkte statische Druck in einem abgeschlossenen Meßraum gemessen wird, der über eine Bohrung mit dem Verstreckrohr in Verbindung steht.

3. Verfahren nach Anspruch 2, **dadurch gekennzeichnet, daß** die Druckmessung mittels eines Drucksensors erfolgt, der mit dem abgeschlossenen Meßraum über eine Schlauchleitung verbunden ist.

4. Verfahren nach Anspruch 1, **dadurch gekennzeichnet, daß** die Druckmeßwerte mehrerer Injektordüsen sequentiell abgefragt werden.

5. Verfahren nach Anspruch 4, **dadurch gekennzeichnet, daß** der durch den Staudruck im Verstreckrohr bewirkte statische Druck in einem abgeschlossenen Meßraum gemessen wird, der über eine Bohrung mit dem Verstreckrohr in Verbindung steht und die Druckmessung mittels eines Drucksensors erfolgt, der mit dem abgeschlossenen Meßraum über eine Schlauchleitung verbunden ist, wobei die Abfrage der Druckmeßwerte mehrerer Injektordüsen durch einen pneumatischen Stufenschalter erfolgt.

6. Verfahren nach Anspruch 4, **dadurch gekennzeichnet, daß** der durch den Staudruck im Verstreckrohr bewirkte statische Druck in einem abgeschlossenen Meßraum gemessen wird, der über eine Bohrung mit dem Verstreckrohr in Verbindung steht und die Druckmessung mittels eines Drucksensors erfolgt, der mit dem abgeschlossenen Meßraum über eine Schlauchleitung verbunden ist, wobei die Abfrage der Druckmeßwerte mehrerer Injektordüsen über ein automatisch gesteuertes Magnetventilsystem erfolgt.

7. Verfahren nach Anspruch 4, **dadurch gekennzeichnet, daß** der Meßdruck nacheinander einem einzigen Meßwertumformer zugeführt und angezeigt wird.

8. Verfahren nach Anspruch 4, **dadurch gekennzeichnet, daß** der gemessene Gasdurchsatz der einzelnen Düsen mit einem vorbestimmten Sollwert verglichen wird und bei Über- oder Unterschreiten eines vorgegebenen Bereiches so eingeregelt wird, daß der Gasdurchsatz in besagten Bereich zurückgeführt wird.

9. Injektordüse umfassend einen Einzugstrichter (1), der durch ein Injektorrohr (4) verlängert ist, und der in eine Gas-Verteilerkammer (2) mündet, welche zumindest mit einer Gaszuführleitung (3) ausgestattet ist, und welche Gas-Verteilerkammer (2) durch eine gekrümmte Rotationsfläche (5) mit einem Austrittskanal (6) verbunden ist an den sich ein Verstreckrohr (7) anschließt, wobei die Längsachse des Injektorrohres (4) mit der Längsachse des Austrittskanals (6) zusammenfällt und das stromab gelegene Ende des Injektorrohres (4) in der Höhe der Verbindung des Austrittskanals (6) mit der gekrümmten Rotationsfläche (5) liegt, **dadurch gekennzeichnet, daß** das Verstreckrohr (7) eine Druckmeßeinrichtung (8) aufweist.

10. Injektordüse nach Anspruch 9, **dadurch gekennzeichnet, daß** das Injektorrohr (4) in Richtung seiner Längsachse bewegbar ausgestaltet ist.

11. Injektordüse nach Anspruch 9, **dadurch gekennzeichnet, daß** im Verstreckrohr (7) eine Bohrung (9) angebracht ist, welche in einen abgeschlossenen Meßraum (10) mündet, in dem die Druckmessung mittels einer Druckmeßeinrichtung (8) erfolgt, die vorzugsweise mit dem abgeschlossenen Meßraum (10) über eine Schlauchleitung (11) verbunden ist.

12. Injektordüsenanordnung umfassend mehrere Injektordüsen nach Anspruch 9 und einen Wahlschalter, mittels der die Druckmeßeinrichtungen (8) der einzelnen Injektordüsen sequentiell abgefragt werden.

13. Injektordüsenanordnung nach Anspruch 12, **dadurch gekennzeichnet, daß** es sich bei dem Wahlschalter um einen pneumatischen Stufenschalter handelt.

14. Injektordüsenanordnung nach Anspruch 12, **dadurch gekennzeichnet, daß** ein einziger Meßwertumformer vorgesehen ist, der von dem Wahlschalter angesteuert wird.

15. Injektordüsenanordnung nach Anspruch 14, **dadurch gekennzeichnet, daß** der Meßwertumformer eine Anzeigeeinrichtung aufweist, welche die ermittelten Druckwerte anzeigt, vorzugsweise eine Anzeigeeinrichtung pro Injektordüse.

16. Injektordüsenanordnung nach Anspruch 14, **dadurch gekennzeichnet, daß** eine Regeleinrichtung sowie Vorrichtungen zum Einstellen des Gasdurchsatzes durch die Injektordüsen vorgesehen sind, welche Regeleinrichtung vom Meßwertumformer angesteuert wird, den gemessenen Gasdurchsatz durch die einzelnen Injektordüsen mit einem vorbestimmten Sollwert vergleicht und bei Über- oder Unterschreiten eines vorgegebenen Bereiches mittels der Vorrichtungen so einregelt, daß der Gasdurchsatz in besagten Bereich zurückgeführt wird.

17. Verwendung der Injektordüsenanordnung nach Anspruch 12 zur Messung des Gasdurchsatzes der Verstreckdüsen bei der Herstellung von Spinnvliesen.

## Claims

1. A process for the control of the gas flow rate through injector nozzles wherein a stretch pipe is connected at the outlet side of each injector nozzle, **characterized in that** the pressure is measured in the stretch pipe connected at the outlet side of the injector nozzle.

2. The process of claim 1, **characterized in that** the static pressure effected by the impact pressure within the stretch pipe is measured in a closed measuring chamber connected with the stretch pipe via a boring.

3. The process of claim 2, **characterized in that** the pressure measurement is executed by means of a pressure sensor connected with the closed measuring chamber via a hose pipe.

4. The process of claim 1, **characterized in that** the pressure data of several injector nozzles are sampled sequentially.

5. The process of claim 4, **characterized in that** the static pressure effected by the impact pressure within the stretch pipe is measured in a closed measuring chamber connected with the stretch pipe via a boring and **in that** the pressure measurement is executed by means of a pressure sensor connected with the closed measuring chamber via a hose pipe, the sampling of the pressure data of several injector nozzles being executed by a pneumatic multiple contact switch.

6. The process of claim 4, **characterized in that** the static pressure effected by the impact pressure within the stretch pipe is measured in a closed measuring chamber connected with the stretch pipe via a boring and **in that** the pressure measurement is executed by means of a pressure sensor connected with the closed measuring chamber via a hose pipe, the sampling of the pressure data of several injector nozzles being executed by an automatically controlled solenoid valve system.

7. The process of claim 4, **characterized in that** the gauge pressure is supplied in turn to a single transmitter and is indicated.

8. The process of claim 4, **characterized in that** the measured gas flow rate of the individual nozzles is compared with a predetermined setpoint and, when it has gone beyond or has fallen below a predetermined range, it is controlled so as to restore the gas flow rate in said predetermined range.

9. An injector nozzle comprising a charge funnel (1) extended by an injector pipe (4) and ending in a gas distribution chamber (2) which is provided with at least one gas delivery conduit (3), said gas distribution chamber (2) being connecteed via an arcuated rotational surface (5) with a discharge channel (6) to which a stretch pipe (7) is adjacent, the longitudinal axis of said injector pipe (4) matching with the longitudinal axis of said discharge channel (6) and the downstream end of said injector pipe (4) lying level with the connection of said discharge channel (6) with the arcuated rotational surface (5), **characterized in that** the stretch pipe (7) comprises a pressure measuring device (8).

10. The injector nozzle of claim 9, **characterized in that** the injector pipe (4) is developped so as to be movable in the direction of its longitudinal axis.

11. The injector nozzle of claim 9, **characterized in that** a boring (9) is provided in the stretch pipe (7), said boring ending in a closed measuring room (10) wherein pressure measuring is executed by means of a pressure measuring device (8) preferably connected with said closed measuring room (10) via a hose pipe (11).

12. An injector nozzle installation comprising several injector nozzles of claim 9 and a selector switch wherewith the pressure measuring devices (8) of the individual injector nozzles can be interrogated sequentially.

13. The injector nozzle installation of claim 12, **characterized in that** the selector switch is a pneumatic multiple contact switch.

14. The injector nozzle installation of claim 12, **characterized in that** there is provided a single transmitter driven by the selector switch.

15. The injector nozzle installation of claim 14, **characterized in that** the transmitter comprises an indicating device indicating the measured pressure data, preferably one indicating device per injector nozzle.

16. The injector nozzle installation of claim 14, **characterized in that** there are provided a control device and setting devices for the gas flow rate through the injector nozzles, said control device being driven by the transmitter and comparing the measured gas flow rate through the individual injector nozzles with a predetermined setpoint and, when said gas flow rate has gone beyond or has fallen below a predetermined range, controlling it so as to restore the gas flow rate in said predetermined range.

17. The use of the injector nozzle installation of claim 12 for measuring the gas flow rate through the stretch nozzles in the manufacture of spun-laid nonwoven.

## Revendications

1. Procédé pour contrôler l'écoulement gazeux à travers des buses d'injection, un tube d'étirage étant disposé en aval de chaque buse d'injection, **caractérisé en ce que** la pression dans le tube d'étirage placé en aval de la buse d'injection est détectée.

2. Procédé selon la revendication 1, **caractérisé en ce que** la pression statique provoquée dans le tube d'étirage par la pression dynamique est mesurée dans une chambre de mesure fermée qui est reliée au tube d'étirage par l'intermédiaire d'une ouverture.

3. Procédé selon la revendication 2, **caractérisé en ce que** la mesure de la pression a lieu au moyen d'un capteur de pression qui est relié par un tuyau à la chambre de mesure fermée.

4. Procédé selon la revendication 1, **caractérisé en ce que** les valeurs de mesure de pression de plusieurs buses d'injection font l'objet d'une interrogation séquentielle.

5. Procédé selon la revendication 4, **caractérisé en ce que** la pression statique provoquée par la pression dynamique dans le tube d'étirage est mesurée dans une chambre de mesure fermée, qui est reliée, par l'intermédiaire d'une ouverture, au tube d'étirage, et **en ce que** la mesure de la pression a lieu au moyen d'un capteur de pression, qui est relié par un tuyau à la chambre de mesure fermée, l'interrogation des valeurs de mesure de pression de plusieurs buses d'injection ayant lieu avec un sélecteur pneumatique à paliers.

6. Procédé selon la revendication 4, **caractérisé en ce que** la pression statique provoquée par la pression dynamique dans le tube d'étirage est mesurée dans une chambre de mesure fermée, qui est reliée, par l'intermédiaire d'une ouverture au tube d'étirage, et **en ce que** la mesure de la pression a lieu au moyen d'un capteur de pression, qui est relié par un tuyau à la chambre de mesure fermée, l'interrogation des valeurs de mesure de pression de plusieurs buses d'injection ayant lieu par l'intermédiaire d'un système de vannes magnétiques piloté automatiquement.

7. Procédé selon la revendication 4, **caractérisé en ce que** la pression de mesure est successivement amenée à un seul convertisseur de valeurs de mesure et est affichée.

8. Procédé selon la revendication 4, **caractérisé en ce que** le débit de gaz mesuré dans les différentes buses est comparé à une valeur de consigne prédéterminée et, en cas de sortie d'une plage prédéterminée dans un sens ou dans l'autre, est régulé de manière à ce qu'il soit ramené à l'intérieur de la plage mentionnée.

9. Buse d'injection comprenant une trémie d'alimentation (1), qui est prolongée par un tube d'injection (4) et qui aboutit dans une chambre de répartition des gaz (2), qui est munie au moins d'une conduite d'arrivée de gaz (3), la chambre de répartition des gaz (2) étant reliée par l'intermédiaire d'une surface de rotation courbe (5) à un canal de sortie (6) auquel se raccorde un tube d'étirage (7), l'axe longitudinal du tube d'injection (4) se trouvant dans le prolongement de l'axe longitudinal du canal de sortie (6) et l'extrémité du tube d'injection (4) située en aval du flux se trouvant à la hauteur de la liaison du canal de sortie (6) avec la surface de rotation courbe (5), **caractérisé en ce que** le tube d'étirage (7) est équipé d'un dispositif de mesure de la pression (8).

10. Buse d'injection selon la revendication 9, **caractérisée en ce que** le tube d'injection (4) est conçu de manière mobile en direction de son axe longitudinal.

11. Buse d'injection selon la revendication 9, **caractérisée en ce que** dans le tube d'étirage (7) est pratiquée une ouverture (9) qui aboutit dans une chambre de mesure fermée (10) dans laquelle la mesure de la pression a lieu au moyen d'un dispositif de mesure de la pression (8) qui est relié de préférence avec la chambre de mesure fermée (10) par un tuyau (11).

12. Assemblage de buses d'injection comprenant plusieurs buses d'injection selon la revendication 9 et un sélecteur au moyen duquel les dispositifs de mesure de la pression (8) des différentes buses d'injection font l'objet d'une interrogation séquentielle.

13. Assemblage de buses d'injection selon la revendication 12, **caractérisé en ce que** le sélecteur est un sélecteur pneumatique à paliers.

14. Assemblage de buses d'injection selon la revendication 12, **caractérisé en ce qu'**un seul convertisseur de valeurs de mesure piloté par le sélecteur est prévu.

15. Assemblage de buses d'injection selon la revendication 14, **caractérisé en ce que** le convertisseur de valeurs de mesure est muni d'un dispositif indicateur qui affiche les valeurs de pression détectées, de préférence un dispositif indicateur pour chaque buse d'injection.

16. Assemblage de buses d'injection selon la revendication 14, **caractérisé en ce qu'**un dispositif de régulation ainsi que des dispositifs pour le réglage du débit de gaz à travers les buses d'injection sont prévus, ce dispositif de régulation étant piloté par le convertisseur de valeurs de mesure, comparant le débit de gaz à travers les différentes buses d'injection qui a été mesuré à une valeur de consigne prédéterminée et, en cas de sortie d'une plage prédéterminée dans un sens ou dans l'autre, le régulant au moyen des dispositifs de manière à ce que ce débit de gaz soit ramené à l'intérieur de la plage mentionnée.

17. Utilisation de l'assemblage de buses d'injection selon la revendication 12 pour la mesure du débit de gaz dans les buses d'étirage lors de la réalisation de couches de fibres filées.
